# EUROPÄISCHE PATENTSCHRIFT

(11) **EP 1 030 799 B1**
(45) Veröffentlichungstag und Bekanntmachung des Hinweises auf die Patenterteilung: **25.09.2002**
(21) Anmeldenummer: 98962330.1
(22) Anmeldetag: 11.11.1998
(51) Int. Cl.: B60T 8/36

(54) **HYDRAULIKAGGREGAT FÜR SCHLUPFGEREGELTE BREMSANLAGEN**
HYDRAULIC AGGREGATE FOR SLIP-CONTROLLED BRAKING SYSTEMS
GROUPE HYDRAULIQUE DESTINE A DES SYSTEMES DE FREINAGE DOTES D'UN SYSTEME ANTIBLOCAGE DES ROUES

(30) Priorität: 14.11.1997 DE 19750458; 13.02.1998 DE 19805843
(43) Veröffentlichungstag der Anmeldung: 30.08.2000
(73) Patentinhaber: Continental Teves AG & Co. oHG, 60488 Frankfurt am Main (DE)
(72) Erfinder: DINKEL, Dieter, D-65817 Eppstein/Ts. (DE); HINZ, Axel, D-61267 Neu-Anspach (DE); REINARTZ, Hans-Dieter, D-60439 Frankfurt am Main (DE)
(86) Internationale Anmeldenummer: EP9807226
(87) Internationale Veröffentlichungsnummer: WO99025594

(56) Entgegenhaltungen:
- EP-A- 0 373 551
- EP-A- 0 675 030
- WO-A-91/16221
- WO-A-95/05543
- DE-A- 4 013 160
- US-A- 5 449 226
- JONNER W -D ET AL: "ANTIBLOCKIERSYSTEM UND ANTRIEBSSCHLUPFREGELUNG DER FUNFTEN GENERATION" ATZ AUTOMOBILTECHNISCHE ZEITSCHRIFT, Bd. 95, Nr. 11, 1. November 1993, Seiten 572-574, 579/580, XP000409587

## Beschreibung

Die Erfindung betrifft ein Hydraulikaggregat für schlupfgeregelte Bremsanlagen nach dem Oberbegriff des Patentanspruchs 1.

Aus der DE 40 13 160 A1 ist bereits ein Hydraulikaggregat für eine schlupfgeregelte Bremsanlage bekannt geworden, in dessen Aufnahmekörper mehrere Ventilaufnahmebohrungen in einer ersten und zweiten Ventilreihe eingebracht sind, die Ein- und Auslaßventile aufnehmen. Außerhalb zu den beiden Ventilreihen ist im blockförmigen Aufnahmekörper eine Pumpenbohrung angeordnet, die quer zur Einmündungsrichtung der Ventilaufnahmebohrungen in den Aufnahmekörper ausgerichtet ist. Ferner befindet sich außerhalb zu den beiden Ventilreihen im Aufnahmekörper eine Motoraufnahmebohrung, die senkrecht in die Pumpenbohrung gerichtet ist. Weitere Aufnahmebohrungen für Speicherelemente und Dämpfungskammern befinden sich senkrecht zu den Achsen der Ventilaufnahmebohrungen gerichtet, die durch die Pumpenbohrung von den Ventilreihen beabstandet sind. In jeder der beiden Ventilreihen befinden sich sowohl Einlaß- als auch Auslaßventile, wobei die Auslaßventile jeweils zwischen den Ventilaufnahmebohrungen der Einlaßventile gelegen sind, so daß auch die funktionell mit den Auslaßventilen zusammenwirkenden Speicherelemente fluchtend zu jeweils einem Paar Auslaßventile im Aufnahmekörper angeordnet sind. Die Aufnahmebohrungen für die Speicherelemente werden beiderseits von den Geräuschdämpfungskammern begrenzt, die sowohl mit der Druckseite der Pumpe als auch mit den Einlaßventilen in den beiden Ventilreihen hydraulisch verbunden sind.

Durch die sich seitlich sowie rechtwinklig zur Achse der Pumpenaufnahmebohrung erstreckenden Aufbohrungen für die Speicherelemente und die Dämpfungskammer besteht ein großer Volumenbedarf zur Integration aller Aufnahmebohrungen im Aufnahmekörper. Die daraus resultierenden Außenabmessungen des blockförmigen Aufnahmekörpers benötigen einen entsprechend großen Einbauraum des Hydraulikaggregates innerhalb des Fahrzeuges. Ein weiterer Nachteil ist darin zu sehen, daß die vorgeschlagene Verbohrung des Aufnahmekörpers keinen Freiraum zur Anordnung weiterer Aufnahmebohrungen bei gleichen Außenabmessungen des blockförmigen Aufnahmekörpers zuläßt, so daß das Hydraulikaggregat bei den vorgegebenen Abmessungen funktional nicht erweiterungsfähig ist. Ferner ergeben sich durch die Verteilung der Einlaß- und Auslaßventile auf beide Ventilreihen zu beiden Seitenflächen des Aufnahmekörpers verteilte Druckmittelanschlüsse, die zu den Radbremsen führen, wodurch ein zusätzlicher Platzbedarf zu beiden Seiten des Aufnahmekörpers als auch für die Führung der Anschlußleitungen außerhalb des Aufnahmekörpers besteht.

Aus der gattungsbildenden US-A-5 449 226 ist bereits ein Hydraulikaggregat für schlupfgeregelte Bremsanlagen bekannt geworden, dessen die Ein- und Auslaßventile in zwei Ventilreihen aufweisenden Ventilaufnahmebohrungen seitlich versetzt zu einer Pumpenbohrung in einem Aufnahmekörper angeordnet sind. Getrennt durch eine auf Höhe der Pumpenbohrung in den Aufnahmekörper lotrecht hineinreichende Gewindebohrung, die für die Befestigung eines die Einlaß- und Auslaßventile verschließenden Deckels vorgesehen ist, befinden sich gleichfalls entfernt in seitlicher Lage zur Pumpen- als auch Gewindebohrung in einer Reihe mehrere Speicheraufnahmebohrungen und Geräuschdämpfungskammern, die außerhalb des Deckels angeordnet sind. Die seitich von der Pumpenbohrung weit entfernte Lage der Speicheraufnahmebohrungen ist somit durch die Deckelbefestigung, Deckelgröße als auch durch die Anordnung eines großzügig bemessenen Silentblocks (Aggregatehalter), der Platz zwischen den Speicheraufnahmebohrungen und dem Deckel benötigt, bedingt. Die Druckmittelkanäle sind ausschließlich in vertikaler und horizontaler Anordnung im Aufnahmekörper ausgeführt.

Daher ist es die Aufgabe der vorliegenden Erfindung, ein Hydraulikaggregat der angegebenen Art derart zu verbessern, daß unter Einhaltung möglichst kleiner Gehäuseabmessungen eine optimale Plazierung aller Aufnahmebohrungen im Gehäuse zustande kommt, die bei einheitlicher Gestaltung des Aufnahmekonzepts mit einfachen Mitteln funktional erweiterungsfähig ist.

Diese Aufgabe wird erfindungsgemäß für ein Hydraulikaggregat der eingangs genannten Gattung durch die kennzeichnenden Merkmale des Patentanspruchs 1 gelöst.

Weitere Merkmale und Vorteile der Erfindung gehen im nachfolgenden aus der Beschreibung eines Beispieles zur Gestaltung eines Hydraulikaggregats anhand mehrerer Zeichnungen hervor.

Es zeigen:
- Fig. 1: eine Draufsicht auf die mit den Ventil- und Speicheraufnahmebohrungen versehene Grundfläche des Hydraulikaggregats
- Fig. 2: eine dreidimensionale Darstellung des in Fig. 1 gezeigten Aufnahmekörpers zur Verdeutlichung aller Aufnahmebohrungen und Druckmittelkanäle,
- Fig. 3: eine um die Hoch- und Längsachse des Aufnahmekörpers gedrehte Ansicht zur Verdeutlichung der in Fig. 1 und 2 gezeigten Einzelheiten,
- Fig. 4: eine dreidimensionale Darstellung eines gegenüber den Fig. 1-3 modifizierten Aufnahmekörpers mit in der Pumpenaufnahmebohrung integrierten Dämpfungskammer,
- Fig. 5 bis 7: an verschiedenen Niederdruckspeicher-Konstruktionen angepaßte Speicheraufnahmebohrungen,
- Fig. 8 und 9: verschiedene Ausführungsbeispiele zur Gestaltung der Dämpferkammern im Aufnahmekörper.

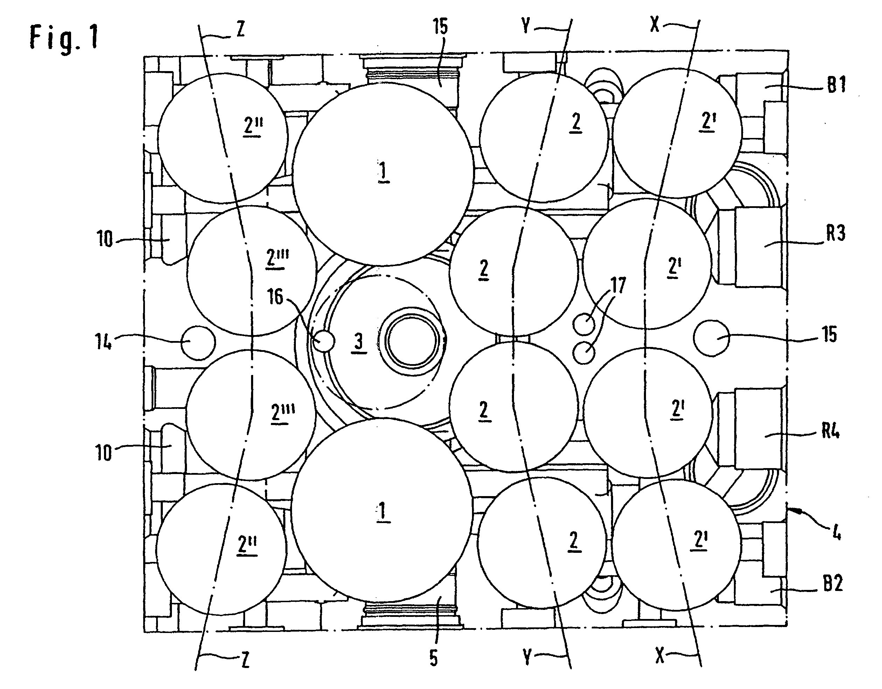

In der Abbildung nach Fig. 1 ist der Grundriß des blockförmigen Aufnahmekörpers 4 in erheblich vergrößerter Darstellung gezeigt. Die abbildungsgemäße Grundfläche des Aufnahmekörpers 4 beinhaltet in einer ersten und zweiten Ventilreihe X,Y insgesamt acht Ventilaufnahmebohrungen 2,2', in denen elektromagnetisch betätigbare Einlaß- und Auslaßventile eingesetzt werden. Neben und damit außerhalb zu den beiden Ventilreihen X,Y befindet sich eine Pumpenaufnahmebohrung 5, die in vorliegender Abbildung von zwei parallelen Speicheraufnahmebohrungen 1 verdeckt werden. Die Speicheraufnahmebohrungen 1 befinden sich achsparallel zu den Ventilaufnahmebohrungen 2,2' sowie seitlich der beiden Ventilreihen X,Y, während sich die Pumpenaufnahmebohrung 5 parallel zu den Ventilreihen X,Y erstreckt. Zwischen den beiden Speicheraufnahmebohrungen 1 befindet sich mittig eine Motoraufnahmebohrung 3, die sich achsparallel zu den Speicheraufnahmebohrungen 1 in die Pumpenaufnahmebohrung 5 erstreckt. Die somit senkrecht auf die Pumpenbohrung 5 gerichtete Motoraufnahmebohrung 3 nimmt nicht nur den zum Antrieb einer Pumpe in der Pumpenaufnahmebohrung 5 befestigten Flansch eines Elektromotors auf, sondern auch den für die Pumpe erforderlichen Exzenter- oder Kurbelantrieb. Unter Beachtung der bisher beschriebenen Aufnahmebohrungen tritt bereits die hohe Integrationsdichte für die einzelnen Funktionselemente auf kleinster Grundfläche des Ventilaufnahmekörpers 4 hervor. Dies basiert auf dem Erfindungsgedanken, die Speicheraufnahmebohrungen 1, die Ventilaufnahmebohrungen 2, 2' und die Motoraufnahmebohrung 3 ausschließlich achsparallel zueinander auszurichten und die Speicheraufnahmebohrungen 1 und die Ventilaufnahmebohrungen 2,2' nebeneinander angeordnet möglichst auf eine einzige Gehäusefläche zu verteilen, die wie aus den nachfolgenden dreidimensionalen Abbildungen hervorgeht, auf eine möglichst geringe Bohrungstiefe im Aufnahmekörper 4 beschränkt ist. Die unmittelbar neben der Pumpenaufnahmebohrung 5 und der Speicheraufnahmebohrung 1 gelegene zweite Ventilreihe Y nimmt ausschließlich die für den Bremsdruckabbau in den Radbremsen erforderlichen Auslaßventile auf. Hierdurch ergibt sich eine besonders kurze Druckmittelverbindung von den Auslaßventilen zum saugseitigen Anschluß in der Pumpenbohrung 5, über die Speicheraufnahmebohrungen 1, in die zur Zwischenspeicherung des jeweils vom Auslaßventil kommenden Druckmittels ein Kolbenspeicher oder Membranspeicher eingesetzt ist. Die Einlaßventile befinden sich in den Ventilaufnahmebohrungen 2' der ersten Ventilreihe X, die durch die zweite Ventilreihe Y von der Pumpenaufnahmebohrung 5 und den Speicheraufnahmebohrungen 1 räumlich getrennt sind. Die Anordnung der Einlaßventile in der ersten Ventilreihe X hat den Vorteil, daß die in Nähe der ersten Ventilreihe X in den Aufnahmekörper 4 einmündenden Anschlüsse B1, B2 des Bremsdruckgebers und die zu den Radbremsen führenden Anschlüsse R1, R2, R3, R4 gleichfalls möglichst eng beieinander liegen, womit sich ein einheitliches Anschlußbild für die Bremsleitungen an einer Seitenfläche des Aufnahmekörpers 4 ergibt. Aus der Fig. 1 geht ferner eine dritte Ventilreihe Z hervor, die entfernt von der ersten und zweiten Ventilreihe X,Y in die Gehäusefläche des Aufnahmekörpers 4 einmündet. Die somit unmittelbar neben den beiden Speicheraufnahmebohrungen 1 angeordnete dritte Ventilreihe Z gewährleistet eine einfache funktionelle Erweiterung des für Blockierdruckregelung ausgelegten Hydraulikaggregates zum Zwecke einer Antriebsschlupf- bzw. Fahrdynamikregelung, wozu in den beiden äußeren Ventilaufnahmebohrungen 2'' als elektrische Umschaltventile ausgeführte, in Grundstellung geschlossene Magnetventile eingesetzt werden. In den beiden dazwischenliegenden Ventilaufnahmebohrungen 2''' der Ventilreihe Z werden in Grundstellung geöffnete Magnetventile eingesetzt .

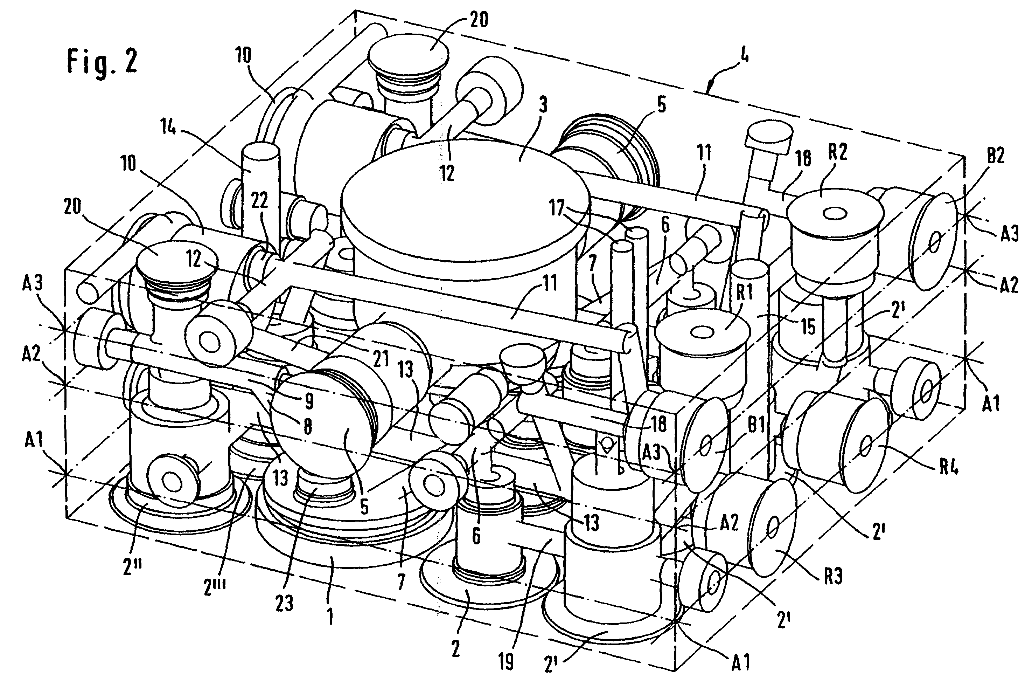

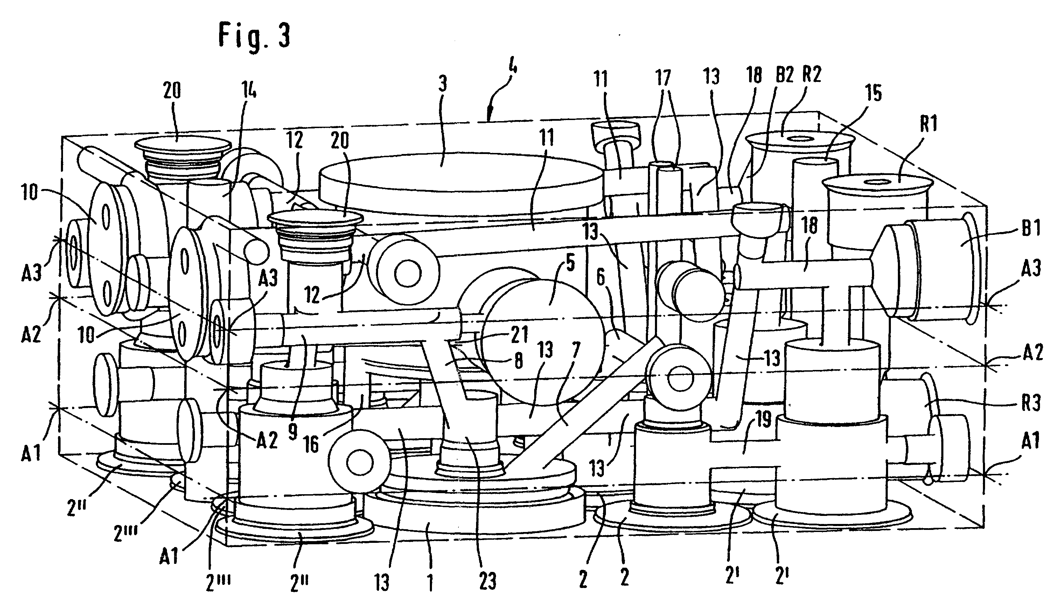

Die zur gewünschten Funktion des Hydraulikaggregates erforderlichen Druckmittelkanäle sollen hinsichtlich ihrer Verbindung mit den beschriebenen Aufnahmebohrungen im nachfolgenden anhand den Fig. 2 und 3 erläutert werden. Abschließend soll bezüglich Fig. 1 nicht unerwähnt bleiben, daß trotz der äußerst dichten Anordnung der beschriebenen Blockverbohrung zur Aufnahme der einzelnen Funktionselemente die zwischen den beiden Ventilreihen X,Y verbleibenden Zwischenräume für die Aufnahme von Durchgangsöffnungen 17 genutzt werden können, die zur Stromversorgung des Elektromotors innerhalb der Motoraufnahmebohrung 3 genutzt werden können. Dadurch, daß die inneren Ventilaufnahmebohrungen jeweils gegenüber den äußeren Ventilaufnahmebohrungen jeder Ventilreihe X,Y,Z in Richtung der Motoraufnahmebohrung 3 versetzt sind, verbleibt auch außerhalb der ersten Ventilreihe X und dritten Ventilreihe Z ein erwünschter Freiraum zur Anordnung von Durchgangs- oder Gewindelöchern 14,15 zur Befestigung eines die abbildungsgemäße Grundfläche verschließenden Dekkels, der darüber hinaus Bestandteil eines in ihm integrierten elektronischen Reglers sein kann. Gleichfalls kann der in die Motoraufnahmebohrung 3 eingesetzte Elektromotor mit seinem Flanschteil auf der von den Ventilreihen X,Y,Z abgewandten Stirnfläche des Aufnahmekörpers 4 unter Zuhilfenahme einer Schraubverbindung in den Durchgangslöchern 14,15 befestigt werden. Schließlich soll auch nicht unerwähnt bleiben, daß durch die Anordnung und Gestaltung der Motoraufnahmebohrung 3 bei Bedarf eine Leckagebohrung 16 zur Ableitung des eventuell sich ansammelnden Flüssigkeitsvolumens vorgesehen sein kann. Andererseits ermöglicht die vorgeschlagene Motoraufnahmebohrung 3 durch ihre entsprechend großzügige Volumenaufnahme in gewissen Grenze eine Leckagespeicherung, so daß ggf. auf die dargestellte Leckagebohrung 16 verzichtet werden kann.

Die Fig. 2 zeigt ausgehend von der Beschreibung der Abbildung nach Fig. 1 die räumliche Anordnung der Druckmittelkanäle und Aufnahmebohrungen des Hydraulikaggregats, die zu einer sog. Einheitsblockverbohrung führen. Aus dieser dreidimensionalen Betrachtung des Aufnahmekörpers 4 wird ersichtlich, daß die Motoraufnahmebohrung 3 in die Gehäusefläche einmündet, die der die Ventilreihen X,Y,Z und Speicheraufnahmebohrungen 1 aufweisenden Gehäusefläche entgegengelegen ist. Die den Elektromotor somit aufnehmende Gehäusestirnfläche bildet eine großzügige Aufnahme für das Motorgehäuse, wobei nach Wunsch oder Bedarf die im Aufnahmekörper 4 vorgesehenen vertikalen Durchgangsöffnungen 17 zur Motorstromversorgung und die Durchgangslöcher 14,15 zur Flanschbefestigung des Elektromotors mitbenutzt werden können. Trotz der kleinen Abmessungen des Aufnahmekörpers 4 eignet sich durch den verblendenden Freiraum die motorseitige Stirnfläche des Aufnahmekörpers 4 zur Aufnahme der Radbremsanschlüsse R1, R2, die beispielsweise zu den Hinterradbremsen führen. Diese Anschlüsse führen über relativ kurze Druckmittelkanäle zu den äußeren Ventilaufnahmebohrungen 2', in der ersten Ventilreihe X und damit über die darin in Grundstellung geöffneten Einlaßventile zu den Bremsdruckgeberanschlüssen B1, B2. Die Bremsdruckgeberanschlüsse B1, B2 sind über eine in vorliegender Perspektive verdeckte Druckmittelabzweigung auch mit den beiden innerhalb der Ventilreihe X gelegenen Ventilaufnahmebohrungen 2' verbunden, an die auch die gemeinsam mit den Bremsdruckgeberanschlüssen B1, B2 an einer gemeinsamen Seitenfläche vorgesehenen Radbremsanschlüssen R3, R4, die im vorliegenden Ausführungsbeispiel zu den Vorderradbremsen führen, angeschlossen sind. Um jeweils das vom Bremsdruckgeber über die erste Ventilreihe X den Radbremsen zugeführte Bremsflüssigkeitsvolumen in Richtung der Speicheraufnahmebohrung 1 ablassen zu können, befinden sich zwischen jeder diametralen Ventilaufnahmebohrung 2,2' der ersten und zweiten Ventilreihe X,Y eine kurze, horizontale Druckmittelverbindung 19, womit in der Offenstellung des jeweils in der zweiten Ventilreihe Y befindlichen, elektromagnetisch angesteuerten Auslaßventils das in der zugehörigen Ventilaufnahmebohrung 2' der ersten Ventilreihe X anstehende Druckmittel in einen als Sammelkanal ausgebildeten horizontalen Druckmittelkanal 6 gelangt, der über einen nach unten geneigten Verbindungskanal 7 in Richtung der in Figur 1 abgebildeten Gehäusefläche zur Speicheraufnahmebohrung 1 führt. Auch die Speicheraufnahmebohrung 1 weist abbildungsgemäß einen entgegengesetzt und schräg nach oben gerichteten Rücklaufkanal 8 auf, der unter einem definierten Winkel zu einem in die Pumpenaufnahmebohrung 5 einmündenden, horizontal gerichteten Druckmittelkanal 9 führt. Der Druckmittelkanal 9 ist mit einem Pulsationsdämpfer 20 verbunden. Zwischen der Speicheraufnahmebohrung 1 und dem Rücklaufkanal 8 befindet sich ein in Richtung der Speicheraufnahmebohrung 1 sperrendes Rückschlagventil 23. Die Aufnahmebohrung für den Pulsationsdämpfer 20 verläuft konzentrisch zur äußeren Ventilaufnahmebohrung 2'' der dritten Ventilreihe Z aus Richtung der motorseitigen Stirnfläche des Aufnahmekörpers 4 kommend, wodurch mit der äußeren Ventilaufnahmebohrung 2'' ein gemeinsamer Druckmittelanschluß an den zur Saugseite der Pumpe führenden horizontalen Druckmittelkanal 9 gewährleistet ist. In die vertikale, außen liegende Ventilaufnahmebohrung 2'', die das in Grundstellung geschlossene Magnetventil aufnimmt, mündet ferner unterhalb des Druckmittelkanals 9 ein räumlich zwischen der Pumpenaufnahmebohrung 5 und der vertikalen Speicheraufnahmebohrung 1 horizontal verlaufender Druckmittelkanal 13 ein, der gleichfalls jeweils mit einem der beiden Bremsdruckgeberanschlüsse B1,B2 verbunden ist. Dieser Druckmittelkanal 13 führt auch jeweils zu der Ventilaufnahmebohrung 2''', die innerhalb der Ventilreihe Z, d.h. neben der das elektrische Umschaltventil aufnehmenden Ventilaufnahmebohrung 2'' vorgesehen ist. Das in der Ventilaufnahmebohrung 2''' eingesetzte und in Grundstellung geöffnete Magnetventil ermöglicht eine Druckmittelverbindung über den oberhalb der Pumpenaufnahmebohrung 5 im Aufnahmekörper 4 verlaufenden Druckmittelkanal 11 zu den ventilaufnahmebohrungen 2' der ersten Ventilreihe X und damit jeweils zu den Radbremsanschlüssen R1, R3 beziehungsweise R2, R4 eines der beiden Bremskreise. Näherungsweise in einer Mittenlage der Ventilaufnahmebohrungen 2'', 2''' befindet sich jeweils oberhalb von der dritten Ventilreihe Z eine Geräuschdämpfungskammer 10, in die je Bremskreis ein von der Pumpenaufnahmebohrung 5 kommender Druckanschluß 21 einmündet. Am Ausgang der Geräuschdämpfungskammer 10 besteht über eine Blende 22 eine Verbindung zum horizontalen Druckmittelkanal 11. Die gezeigte Geräuschdämpfungskammer 10 eines jeden Bremskreises ist mit ihrer Längsachse in die Seitenfläche des Aufnahmekörpers 4 gerichtet und erstreckt sich damit quer zur dritten Ventilreihe Z.

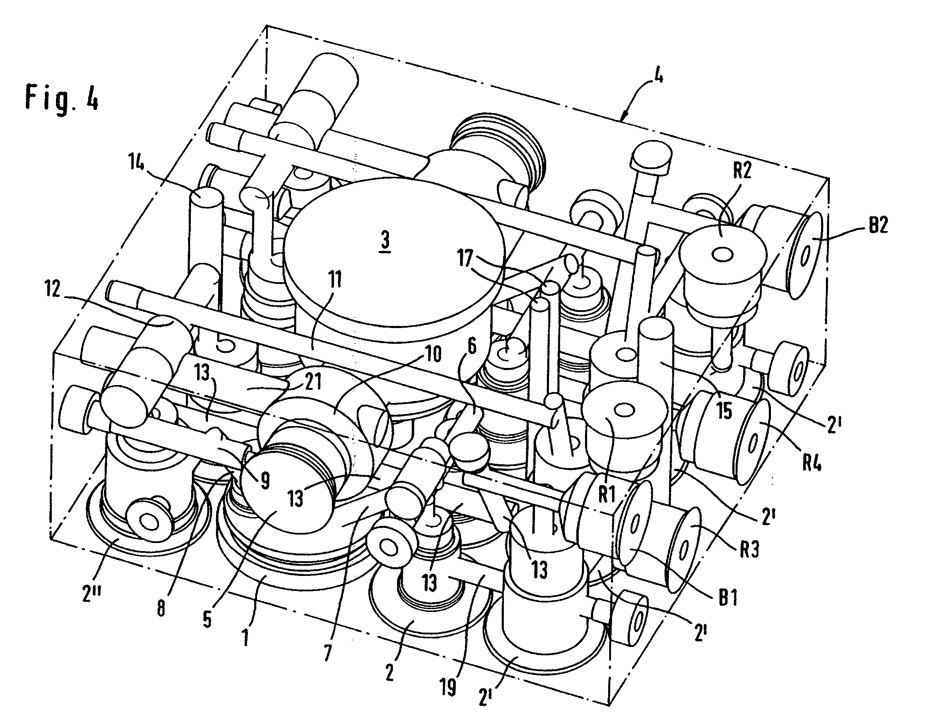

Eine weitere Platzeinsparung ergibt sich, wenn die Geräuschdämpfungskammer 10 unmittelbar der Pumpenaufnahmebohrung 5 als konzentrisch der Pumpendruckseite zugeordneter Ringraum, beispielsweise in Form einer Hinterfräsung der Pumpenaufnahmebohrung 5, ausgebildet wird. Der Druckanschluß 21 der Pumpe kann hierbei ohne maßgebliche Veränderung innerhalb der Blockverbohrung an den zur ersten Ventilreihe X führenden Druckmittelkanal 11 angeschlossen werden. Eine entsprechende Ausführung wird später anhand der Fig. 4 erläutert.

Die Anordnung der Aufnahmebohrungen und der Verlauf der Druckmittelkanäle wurde bisher in Fig. 2 auf die beiden Radbremsen R1, R3 eines Bremskreises beschränkt. Gleicher funktioneller als auch spiegelbildlicher Aufbau besteht für die Verbohrung des Aufnahmekörpers 4 für die Darstellung des zweiten Bremskreises, worauf im weiteren infolge der baulichen Identität nicht eingegangen werden braucht.

Insbesondere unter Rückbezug auf die Darstellung nach Fig. 2 soll im nachfolgenden unter Beachtung der Fig. 3 mit veränderter Perspektivansicht die erfindungsgemäße Anordnung der Aufnahmebohrungen und Druckmittelkanäle verteilt auf mehrere parallele, horizontale angelegte Gehäusbezugsebenen A1, A2, A3, verdeutlicht werden. Abbildungsgemäß verläuft die unterste strichpunktiert angedeutete Gehäusebezugsebene A1 im Bereich der Speicheraufnahmebohrungen 1 und Ventilaufnahmebohrungen 2,2',2'',2''' und damit auf Höhe der Radbremsanschlüsse R3, R4. Eine weitere, auf halber Höhe des Aufnahmekörpers 4 angelegte Gehäusebezugsebene A2 verläuft entlang des Druckmittelkanals 6 und verdeutlicht zwischen den beiden Gehäusebezugsebenen A1, A2 den geneigten Verlauf des Verbindungskanals 7 in Richtung der Speicheraufnahmebohrung 1. Oberhalb der Gehäusebezugsebene A2 und damit auf Höhe der Gehäusebezugsebene A3 gelegen, befindet sich der Druckmittelkanal 9. Auf diesen ist der schräg aus Richtung der Gehäusebezugsebene A2 kommende Rücklaufkanal 8 gerichtet, der in der Gehäusebezugsebene A3 endet. Oberhalb der Gehäusebezugsebene A3 sind die horizontal zu den Gehäuseebenen A1 bis A3 verlaufenden Druckmittelabzweigungen 18 für die Bremsdruckgeberanschlüsse B1, B2 und horizontalen Kanäle 11 der Geräuschdämpfungskammern 10 gelegen. Die Geräuschbezugsebenen A1 bis A3 verdeutlichen die planvolle Verteilung der Druckmittelkanäle und Aufnahmebohrungen, die im Ergebnis zu einer größtmöglichen Integrationsdichte aller Funktionselemente führt.

Besondere Bedeutung hat hierbei die möglichst kurze hydraulische Verbindung zwischen den Ventilaufnahmebohrungen 2 der zweiten Ventilreihe Y, der Speicheraufnahmebohrung 1 und der Pumpenaufnahmebohrung 5 mittels des Druckmittelkanals 6, verbindungskanal 7, Rücklaufkanal 8 und Druckmittelkanal 9. Sie stellen gewissermaßen als sogenannter Sekundärkreis für jede blockiergeschützte Bremsanlage einen unerwünschten, zu entlüftenden, ein Flüssigkeitsvolumen verzerrenden Totraum innerhalb des Aufnahmekörpers 4 dar.

Da das beschriebene Hydraulikaggregat bei gleichem konstruktivem Aufbau nicht auf eine Blockierschutzregelfunktion begrenzt ist, sondern unter einfachster maschineller Fertigung um eine dritte Ventilreihe Z zum Zweck einer Anfahrschlupfals auch Fahrdynamikregelung erweiterungsfähig ist, ergibt sich auch durch die unmittelbare Anbindung der normalerweise von einem Magnetventil verschlossenen Ventilaufnahmebohrung 2'' an den zur Saugseite der Pumpe führenden Druckmittelkanal 9 keine nennenswerte Vergrößerung des mittels den Auslaßventilen vom Bremsenprimärkreis getrennten, oben beschriebenen Totraumvolumens. Ein weiterer Vorteil der Erfindung ergibt sich durch den zwischen der Speicheraufnahmebohrung 1 und der Pumpenaufnahmebohrung 5 liegenden Freiraum zwecks unmittelbarem Anschluß des Pulsationsdämpfers 20 am Rücklaufkanal 8, so daß der Pulsationsdämpfer 20 anstelle der abbildungsgemäßen Anordnung achsparallel zur Pumpenaufnahmebohrung 5 in der Seitenfläche des Aufnahmekörpers 4 und damit auf Höhe des Anschlußpunktes der Rücklaufleitung 8 an der Speicheraufnahmebohrung 1 angeordnet werden kann.

Bezüglich einer zu den voranbeschriebenen Figuren 1 bis 3 gezeigten alternativen koaxialen Anordnung der Geräuschdämpfungskammer 10 zur Pumpenaufnahmebohrung 5 wird auf Fig. 4 verwiesen, die herstellungstechnisch mittels einer Hinterfräsung der Pumpenaufnahmebohrung 5 hergestellt werden kann. Im vorliegenden Ausführungsbeispiel ist sodann der pumpendruckseitige Druckmittelkanal 21 nach wie vor unverändert in Richtung der in den Fig. 1 bis 3 gezeigten Geräuschdämpfungskammer 10 zu führen. Infolge der Verlagerung der Geräuschdämpfungskammer 10 in den Bereich der Pumpenaufnahmebohrung 5 ist die Verlängerung des pumpendruckseitigen Druckmittelkanals 21 mit einem Blindverschluß im Aufnahmekörper 4 versehen. Der Druckmittelkanal 21 führt deswegen über die in den Fig. 2 und 3 bereits gezeigte Druckmittelabzweigung 12 unmittelbar zum Druckmittelkanal 11 des jeweiligen Bremskreises. Alle übrigen in der Fig. 4 gezeigten Merkmale entsprechen bereits den zu den Fig. 1 bis 3 beschriebenen Einzelheiten und sind dementsprechend dort nachzulesen.

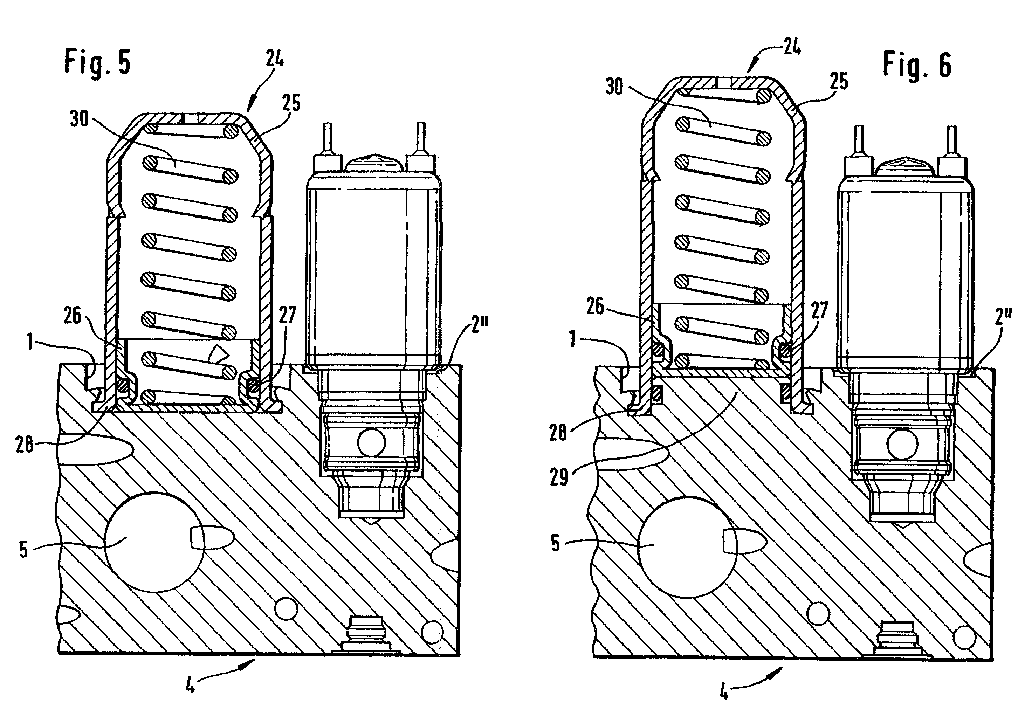

In den nachfolgenden Figuren 5,6 und 7 werden vorteilhafte Ausgestaltungsvarianten zur Darstellung von verschiedenen Befestigungs- als auch Ausführungsmöglichkeiten von Niederdruckspeichern 24 dargestellt, die die Speicheraufnahmebohrungen 1 verschließen.

Die Fig. 5 zeigt hierzu einen als Kolbenspeicher ausgeführten Niederdruckspeicher 24, dessen Gehäuse 25 aus einem vorzugsweise mittels Tiefziehen hergestellten Blechteil besteht, in dem der gleichfalls vorzugsweise aus einem Dünnblechteil gepreßte Kolben 26 mittels eines O-Rings 27 abgedichtet und im Gehäuse 25 geführt ist. Der umlaufende Bund 28 des Gehäuses 25 liegt ebenso wie der Kolbenboden an der Stirnfläche der relativ flachen Speicheraufnahmebohrung 1 an und ist in dieser mittels eines Verstemmwerkzeuges im Aufnahmekörper 4 befestigt.

Abweichend sowie in Ergänzung zur Beschreibung von Fig. 5 zeigt Fig. 6 einen zylinderförmigen Vorsprung 29 in der Speicheraufnahmebohrung 1, der in einer Ringnut zur Abdichtung des Speichergehäuses 25 einen O-Ring aufnimmt.

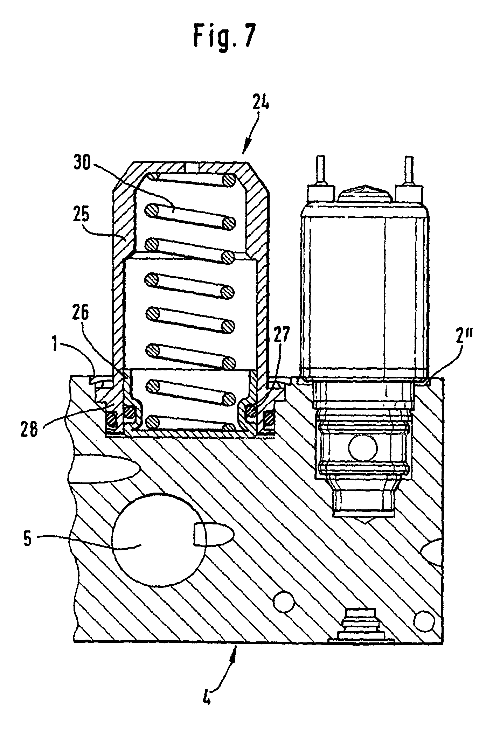

In Fig. 7 wird abweichend von den Einzelheiten nach Fig. 5 und 6 vorgeschlagen, daß das Speichergehäuse 25 aus einem massiven, mit einem Flanschteil versehenen Drehteil besteht, das an seiner Außenkontur einen O-Ring aufnimmt, der die Speicheraufnahmebohrung 1 abdichtet.

In allen vorangegangenen Ausführungsbeispielen nach Fig. 5, 6 und 7 bildet der Niederdruckspeicher 24 eine eigenständig handhabbare Unterbaugruppe, da der Kolben 26 jeweils mit seiner Druckfeder 30 im Speichergehäuse 25 vormontiert ist, bevor er in die Speicheraufnahmebohrung 1 eingefügt werden kann.

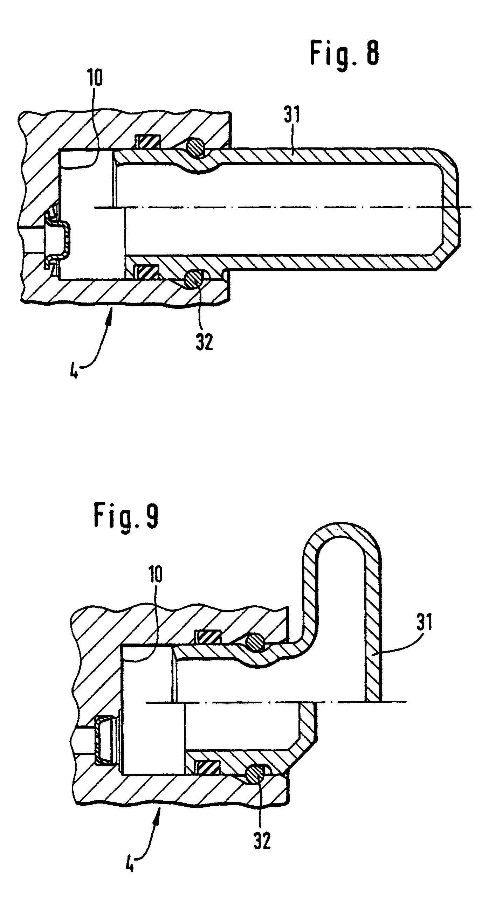

Die Fig. 8 und 9 zeigen mögliche Ausgestaltungsformen zur Geräuschdämpfungskammer 10, die mittels Hülsenverschlußkörpern 31 unterschiedlicher Gestalt und Volumenaufnahme druckmitteldicht verschlossen werden können. Die Hülsenverschlußkörper 31 sind vorzugsweise aus einem Dünnblechteil einstükkig oder zweiteilig hergestellt. Die Befestigung der Hülsenkörper in der Geräuschdämpfungskammer 10 geschieht beispielsweise mittels einem Sicherungsdraht 32. Die Abdichtung des als Deckelverschluß ausgebildeten Dünnblechteils geschieht mittels eines O-Rings.

Zusammenfassend ergibt sich erfindungsgemäß ein verbohrungssystem für einen Aufnahmekörper 4, der ein einheitliches Kanalkonzept und die gleiche Anordnung von Aufnahmebohrungen für die unterschiedlichen Funktionen des Hydraulikaggregats ermöglicht, um damit die Multifunktionalität des Aufnahmekörpers 4 ohne aufwendige Veränderung des Aufnahmekörpers 4 zu gewährleisten. Gleichzeitig sind die erläuterten Aufnahmebohrungen und Druckmittelkanäle möglichst raumsparend angeordnet, so daß die Abmessungen des Aufnahmekörpers 4 ein Minimum bilden. Das erfindungsgemäß vorgeschlagene Hydraulikaggregat läßt sich somit mittels einheitlicher Spann-, Bohr- und Fräsoperationen in der Fertigung herstellen, unabhängig davon, ob es sich hierbei um die Herstellung eines auf die Blockierdruckregelung der Bremsanlage beschränktes Hydraulikaggregat handelt oder um ein um die Fahrdynamikregelung erweitertes Hydraulikaggregat. Durch die Ausrichtung der Speicheraufnahmebohrung 1 seitlich neben den Ventilaufnahmebohrungen 2,2',2'',2''' ergibt sich eine besonders geschützte Anordnung des Niederdruckspeichers 24 innerhalb eines die Ventilaufnahmebohrungen 2,2,2',2'',2''' abdeckenden Deckels, wobei die Tiefe der Speicheraufnahmebohrung 1 im Aufnahmekörper 4 auf ein notwendiges Maß zur Befestigung des Niederdruckspeichers 24 beschränkt ist und das erforderliche Arbeitsvolumen des Niederdruckspeichers 24 in das dekkelförmige Gehäuse 25 verlagert wird.

Ferner zeichnet sich die Erfindung durch besonders kurze Druckmittelwege im Bereich des in den Aufnahmekörper 4 verlagerten Bremsenprimär- und Sekundärkreises aus. Da die Ventilaufnahmebohrungen 2 für die Auslaßventile als auch die Speicheraufnahmebohrungen 1 möglichst nahe zur Pumpenaufnahmebohrung 5 angeordnet sind, ergibt sich ein minimales zu entlüftendes und zu befüllendes Totraumvolumen für den Bremsensekundärkreis.

### Bezugszeichenliste

- 1: Speicheraufnahmebohrung
- 2,2': Ventilaufnahmebohrung
- 2'',2''': Ventilaufnahmebohrung
- 3: Motoraufnahmebohrung
- 4: Aufnahmekörper
- 5: Pumpenbohrung
- 6: Druckmittelkanal
- 7: Verbindungskanal
- 8: Rücklaufkanal
- 9: Druckmittelkanal
- 10: Geräuschdämpfungskammer
- 11: Druckmittelkanal
- 12: Druckmittelabzweigung
- 13: Druckmittelkanal
- 14: Durchgangsloch
- 15: Durchgangsloch
- 16: Leckagebohrung
- 17: Durchgangsöffnung
- 18: Druckmittelabzweigung
- 19: Druckmittelverbindung
- 20: Pulsationsdämpfer
- 21: Druckanschluß
- 22: Blende
- 23: Rückschlagventil
- 24: Niederdruckspeicher
- 25: Gehäuse
- 26: Kolben
- 27: O-Ring
- 28: Bund
- 29: Vorsprung
- 30: Druckfeder
- 31: Hülsenverschlußkörper
- 32: Sicherungsdraht
- A1, A2: Gehäusebezugsebene
- A3, A4: Gehäusebezugsebene
- R1, R2: Radbremsanschlüsse
- R3, R4: Radbremsanschlüsse
- B1, B2: Bremsdruckgeberanschlüsse
- X,Y,Z: Ventilreihen

## Patentansprüche

1. **Hydraulikaggregat für schlupfgeregelte Bremsanlagen,**
- mit einem Aufnahmekörper (4), der in mehreren Ventilaufnahmebohrungen (2, 2') einer ersten und zweiten Ventilreihe (X, Y) Ein- und Auslaßventile aufnimmt, mit einer außerhalb zu den beiden Ventilreihen (X, Y) im Aufnahmekörper (4) angeordneten Pumpenbohrung (5), die quer zur Einmündungsrichtung der Ventilaufnahmebohrungen (2, 2') in den Aufnahmekörper (4) gerichtet ist,
- mit einer außerhalb zu den beiden Ventilreihen (X, Y) im Aufnahmekörper (4) angeordneten Motoraufnahmebohrung (3), die senkrecht auf die Pumpenbohrung (5) gerichtet ist,
- mit einer außerhalb zu den beiden Ventilreihen (X, Y) in den Aufnahmekörper (4) einmündenden Speicheraufnahmebohrung (1),
- mit mehreren die Ventile-, Pumpen- und Speicheraufnahmebohrungen (2, 2', 5, 1) verbindenden Druckmittelkanäle (6, 9, 11, 13), die eine hydraulische Verbindung zwischen einem Bremsdruckgeber und mehreren Radbremsen herzustellen vermögen, wobei die Speicheraufnahmebohrung (1) achsparallel zu den Ventilaufnahmebohrungen (2,2') der beiden Ventilreihen (X,Y) und zur Motoraufnahmebohrung (3) ausgerichtet ist, und daß die Speicheraufnahmebohrung (1) und die Ventilaufnahmebohrungen (2,2') der ersten und zweiten Ventilreihe (X,Y) nebeneinander angeordnet in eine erste Gehäusestirnfläche des Aufnahmekörpers (4) einmünden, **dadurch gekennzeichnet, daß** die Speicheraufnahmebohrung (1) in ihrer Bohrungstiefe derart minimiert ist, daß diese die Pumpenbohrung (5) zu überdecken vermag, und daß infolge der minimalen Bohrungstiefe ein zu der Ventilaufnahmebohrung (2) der zweiten Ventilreihe (Y) führende Verbindungskanal (7) und ein mit der Pumpenbohrung (5) verbundener Rücklaufkanal (8) in Schräglage zur Gehäusestirnfläche des Aufnahmekörpers (4) zur Speicheraufnahmebohrung (1) geführt sind.

2. Hydraulikaggregat nach Anspruch 1, **dadurch gekennzeichnet, daß** die Ventilaufnahmebohrungen (2) für die Auslaßventile, die in der zweiten Ventilreihe (Y) angeord**net** sind, unmittelbar neben der Pumpenbohrung (5) und der Speicheraufnahmebohrung (1) gelegen sind.

3. Hydraulikaggregat nach Anspruch 1, **dadurch gekennzeichnet, daß** die Einlaßventile in den Ventilaufnahmebohrungen (2') der ersten Ventilreihe (X) angeordnet sind, die durch die zweite Ventilreihe (Y) von der Pumpenbohrung (5) und von der Speicheraufnahmebohrung (1) räumlich getrennt ist.

4. Hydraulikaggregat nach Anspruch 1 oder 2, **dadurch gekennzeichnet, daß** mehrere Ventilaufnahmebohrungen (2'',2''') einer dritten Ventilreihe (Z) entfernt von der ersten und zweiten Ventilreihe (X,Y) in die erste Gehäusestirnfläche des Aufnahmekörpers (4) einmünden, wobei die dritte Ventilreihe (Z) unmittelbar neben der Speicheraufnahmebohrung (1) gelegen ist.

5. Hydraulikaggregat nach Anspruch 2, **dadurch gekennzeichnet, daß** die Ventilaufnahmebohrungen (2) der zweiten Ventilreihe (Y) sich bis zu einer zweiten Gehäusebezugsebene (A2) erstrecken und daß die Ventilaufnahmebohrungen (2) paarweise mit jeweils einem Druckmittelkanal (6) verbunden sind, der in einen Verbindungskanal (7) einmündet, der unter einem Neigungswinkel zur Speicheraufnahmebohrung (1) von der zweiten zu einer ersten Gehäusebezugsebene (A2, A1) führt.

6. Hydraulikaggregat nach Anspruch 1, **dadurch gekennzeichnet, daß** der Rücklaufkanal (8) unter einem Neigungswinkel zu einem in die Pumpenaufnahmebohrung (5) einmündenden Druckmittelkanal (9) führt, der außerhalb einer ersten und einer zweiten Gehäusebezugsebene (A1, A2) in einer dritten Gehäusbezugsebene (A3) gelegen ist.

7. Hydraulikaggregat nach den Ansprüchen 5 und 6, **dadurch gekennzeichnet, daß** die Pumpenaufnahmebohrung (5) von dem geneigten Verbindungskanal (7) und Rücklaufkanal (8) begrenzt zwischen der zweiten und dritten Gehäusebezugsebene (A2,A3) gelegen ist.

8. Hydraulikaggregat nach Anspruch 1, **dadurch gekennzeichnet, daß** zur Regelung des Blockierdrucks in den Radbremsen in den Ventilaufnahmebohrungen (2,2') der ersten und zweiten Ventilreihe (X,Y) ausschließlich die Ein- und Auslaßventile elektromagnetisch betätigt sind.

9. Hydraulikaggregat nach Anspruch 4, **dadurch gekennzeichnet, daß** zur Unterbrechung der Druckmittelverbindung zwischen dem Bremsdruckgeberanschluß (B1, B2) und den Einlaßventilen der ersten Ventilreihe (X) in den Ventilaufnahmebohrungen (2''') der dritten Ventilreihe (Z) jeweils ein in Grundstellung offengeschaltetes Magnet ventil eingesetzt ist.

10. Hydraulikaggregat nach Anspruch 9, **dadurch gekennzeichnet, daß** zur direkten hydraulischen Verbindung des Bremsdruckgeberanschlusses (B1,B2) mit einem saugseitigen Anschluß der Pumpenaufnahmebohrung (5) in einer Ventilaufnahmebohrung (2'') der dritten Ventilreihe (Z) ein in Grundstellung geschlossenes Magnetventil vorgesehen ist.

11. Hydraulikaggregat nach Anspruch 1, **dadurch gekennzeichnet, daß** ein druckseitiger Ausgang der Pumpenaufnahmebohrung (5) in eine Geräuschdämpfungskammer (10) einmündet, die außerhalb einer ersten und zweiten Gehäusebezugsebene (A1,A2) des Aufnahmekörpers (4) angeordnet ist.

12. Hydraulikaggregat nach Anspruch 11, **dadurch gekennzeichnet, daß** die Geräuschdämpfungskammer (10) als ein koaxial zur Pumpenaufnahmebohrung (5) ausgerichteter Ringraum ausgeführt ist, der auf Höhe des druckseitigen Kanalgangs der Pumpenaufnahmebohrung 5 gelegen ist.

13. Hydraulikaggregat nach Anspruch 11, **dadurch gekennzeichnet, daß** die Geräuschdämpfungskammer (10) zwischen den Druckmittelanschlüssen der Ventilaufnahmebohrungen (2") einer dritten Ventilreihe (Z) angeordnet sind.

14. Hydraulikaggregat nach Anspruch 11, **dadurch gekennzeichnet, daß** die Geräuschdämpfungskammer (10) an einem Druckmittelkanal (11) angeschlossen ist, der entfernt zu der ersten, zweiten und einer dritten Gehäusebezugsebene (A1,A2,A3) gelegen ist, daß am Druckmittelkanal (11) eine Druckmittelabzweigung (12) angeschlossen ist, die zur Ventilaufnahmebohrung (2") des in der dritten Ven tilreihe (Z) angeordneten und in Grundstellung offen geschalteten Magnetventils führt.

15. Hydraulikaggregat nach Anspruch 1, **dadurch gekennzeichnet, daß** sich die Druckmittelkanäle (9,11,13) entgegengesetzt zu mehreren in den Aufnahmekörper (4) einmündenden Druckmittelanschlüssen des Bremsdruckgebers (B1,B2) und den Radbremsen (R1 bis R4) derart erstrecken, daß wahlweise in einer die erste und zweite Ventilreihe (X,Y) aufweisenden ersten Gehäusestirnfläche eine dritte Ventilreihe (Z) zum Zwecke einer multifunktionalen Einheitsblockverbohrung positionierbar und mit den Druckmittelkanälen (9,11,13) verbindbar ist, wobei die dritte Ventilreihe (Z) durch eine in der ersten Gehäusestirnfläche gelegene Speicheraufnahmebohrung (1) von der ersten und zweiten Ventilreihe (X,Y) beabstandet ist.

16. Hydraulikaggregat nach Anspruch 15, **dadurch gekennzeichnet, daß** die Speicheraufnahmebohrung (1) einen Niederdruckspeicher (24) aufnimmt, der eine eigenständig handhabbare Unterbaugruppe bildet.

## Claims

1. A hydraulic unit for slip-controlled brake systems
- with an accommodating member (4) that contains inlet and outlet valves in several valve-receiving bores (2,2') in a first and second valve row (X,Y),
- with a pump bore (5) arranged outside the two valve rows (X,Y) in the accommodating member (4), which bore is oriented transversely to the direction in which the valve-receiving bores (2,2') open into the accommodating member (4),
- with a motor-receiving bore (3) oriented vertically to the pump bore (5) and arranged outside the two valve rows (X,Y) in the accommodating member (4),
- with an accumulator-receiving bore (1) opening into the accommodating member (4) outside the two valve rows (X,Y),
- with several pressure fluid channels (6,9,11,13) that connect the valve-receiving bores, pump-receiving bores and accumulator-receiving bores (2,2',5,1) and establish a hydraulic connection between one brake pressure generator and several wheel brakes, wherein the accumulator-receiving bore (1) is arranged parallel to the axis of the valve-receiving bores (2,2') of the two valve rows (X,Y) and to the motor-receiving bore (3), and that the accumulator-receiving bore (1) and the valve-receiving bores (2,2') of the first and second valve row (X,Y) open next to one another into a first end face of the accommodating member (4),
**characterized in that** the bore depth of the accumulator-receiving bore (1) has been minimized to such an extent that it can cover the pump bore (5), and **in that** as a result of the minimal bore depth a connecting channel (7) leading to the valve-receiving bore (2) of the second valve row (Y) and a return flow channel (8) connected to the pump bore (5) lead at an angle of slope to the end face of the accommodating member (4) and to the accumulator-receiving bore (1).

2. A hydraulic unit according to Claim 1, **characterized in that** the valve-receiving bores (2) for the outlet valves are arranged in the second valve row (Y) and located directly next to the pump bore (5) and the accumulator-receiving bore (1).

3. A hydraulic unit according to Claim 1, **characterized in that** the inlet valves are arranged in the valve-receiving bores (2') of the first valve row (X), which is spatially separated from the pump bore (5) and the accumulator-receiving bore (1) by the second valve row (Y).

4. A hydraulic unit according to Claim 1 or 2, **characterized in that** several valve-receiving bores (2'',2''') of a third valve row (Z) open into the first end face of the accommodating member (4) at a distance from the first and second valve rows (X,Y), with the third valve row (Z) being located directly next to the accumulator-receiving bore (1) .

5. A hydraulic unit according to Claim 2, **characterized in that** the valve-receiving bores (2) of the second valve row (Y) extend up to a second reference level of the housing (A2) and that pairs of valve-receiving bores (2) are connected to one pressure fluid channel (6) respectively, which opens into a connecting channel (7) that runs at an angle of slope from the second to the first reference level of the housing (A2,A1) to the accumulator-receiving bore (1) .

6. A hydraulic unit according to Claim 2, **characterized in that** the return flow channel (8) leads at an angle of slope to a pressure fluid channel (9) that opens into the pump-receiving bore (5), with such pressure fluid channel (9) being located outside the first and second reference level of the housing (A1,A2) on a third reference level of the housing (A3).

7. A hydraulic unit according to Claims 5 and 6, **characterized in that** the pump-receiving bore (5) is delimited by the sloped connecting channel (7) and return flow channel (8) and located between the second and third reference level of the housing (A2,A3).

8. A hydraulic unit according to Claim 1, **characterized in that** only the inlet and outlet valves in the valve-receiving bores (2,2') of the first and second valve row (X,Y) are actuated electromagnetically to control the locking pressure in the wheel brakes.

9. A hydraulic unit according to Claim 4, **characterized in that** an electromagnetic valve that is open in its initial position is respectively located in the valve-receiving bores (2''') of the third valve row (Z) between the brake pressure generator port (B1,B2) and the inlet valves of the first valve row (X) to interrupt the pressure fluid connection.

10. A hydraulic unit according to Claim 9, **characterized in that** a magnetic valve that is closed in its initial position is provided in a valve-receiving bore (2'') of the third valve row (Z) as a direct hydraulic connection between the brake pressure generator port (B1,B2) and a port of the pump-receiving bore (5) on the inlet side.

11. A hydraulic unit according to Claim 1, **characterized in that** an outlet of the pump-receiving bore (5) on the pressure side opens into a noise-damping chamber (10) which is arranged outside the first and second reference level of the housing (A1,A2) of the accommodating member (4).

12. A hydraulic unit according to Claim 11, **characterized in that** the noise-damping chamber (10) is designed as a ringshaped space oriented co-axially towards the pump-receiving bore (5), the said space being located at the level of the channel of the pump-receiving bore (5) on the pressure side.

13. A hydraulic unit according to Claim 11, **characterized in that** the noise-damping chamber (10) is arranged between the pressure fluid ports of the valve-receiving bores (2'') of the third valve row (Z).

14. A hydraulic unit according to Claim 11, **characterized in that** the noise-damping chamber (10) is connected to pressure fluid channel (11) that is located at a distance from the first, second and a third reference levels of the housing (A1,A2,A3), and **in that** a pressure fluid branch (12) is connected to the pressure fluid channel (11) and leads to the valve-receiving bore (2'') of the electromagnetic valve that is open in its initial position and located in the third valve row (Z).

15. A hydraulic unit according to Claim 1, **characterized in that** the pressure fluid channels (9,11,13) extend in an opposite direction from several pressure fluid ports of the brake pressure generator (B1,B2) opening into the accommodating member (4) and the wheel brakes (R1 to R4) in such a way that a third valve row (Z) can optionally be positioned in a first end face with the first and second valve row (X,Y) for the purpose of obtaining a multifunctional, uniform arrangement of bores in the block and can be connected to the pressure fluid channels (9,11,13), with the third valve row (Z) being arranged at a distance from the first and second valve row (X,Y) due to an accumulator-receiving bore (1) located in the first end face.

16. A hydraulic unit according to Claim 15, **characterized in that** the accumulator-receiving bore (1) holds a low-pressure accumulator (24) that forms an independent subassembly.

## Revendications

1. Groupe hydraulique pour dispositif de freinage à régulation de glissement,
- comprenant un corps de logement (4) qui sert à loger, dans plusieurs alésages de logement de valve (2, 2') d'une première et d'une seconde rangées de valves (X, Y), des valves d'entrée et des valves de sortie, comportant un alésage de pompe (5) qui est disposé à l'extérieur des deux rangées de valves (X, Y) dans le corps de logement (4) et qui est orienté transversalement à la direction de débouché des alésages de logement de valve (2, 2') dans le corps de logement (4),
- comprenant un alésage de logement de moteur (3) qui est disposé à l'extérieur des deux rangées de valve (X, Y) dans le corps de logement (4) et qui est orienté perpendiculairement à l'alésage de pompe (5),
- comprenant un alésage de logement d'accumulateur (1) débouchant à l'extérieur des deux rangées de valve (X, Y) dans le corps de logement (4),
- comprenant plusieurs conduits d'agent de pression (6, 9, 11, 13) qui relient les alésages de logement de valve, de logement de pompe et de logement d'accumulateur (2, 2', 5, 1) et qui permettent de réaliser une liaison hydraulique entre un générateur de pression de frein et plusieurs freins de roue, l'alésage de logement d'accumulateur (1) étant orienté à axe parallèle vis-à-vis des alésages de logement de valve (2, 2') des deux rangées de valves (X, Y) et vis-à-vis de l'alésage de logement de moteur (3),
et en ce que l'alésage de logement d'accumulateur (1) et les alésages de logement de valve (2, 2') des première et seconde rangées de valves (X, Y) débouchent dans une première surface frontale de boîtier du corps de logement (4) en étant disposés les uns à côté des autres,
**caractérisé en ce que** l'alésage de logement d'accumulateur (1) est rendu minimal en ce qui concerne sa profondeur d'alésage d'une manière telle que celui-ci peut recouvrir l'alésage de pompe (5) , et **en ce que**, du fait de la profondeur d'alésage minimale, un conduit de liaison (7) menant à l'alésage de logement de valve (2) de la seconde rangée de valves (Y) et un conduit de retour (8) relié à l'alésage de pompe (5) sont tracés vers l'alésage de logement d'accumulateur (1) en position inclinée vis-à-vis de la surface frontale de boîtier du corps de logement (4).

2. Groupe hydraulique suivant la revendication 1, **caractérisé en ce que** les alésages de logement de valve (2) prévus pour les valves de sortie, qui sont disposés dans la deuxième rangée de valves (Y), sont placés directement à côté de l'alésage de pompe (5) et de l'alésage de logement d'accumulateur (1).

3. Groupe hydraulique suivant la revendication 1, **caractérisé en ce que** les valves d'entrée sont disposées dans les alésages de logement de valve (2') de la première rangée de valves (X), laquelle est séparée spatialement de l'alésage de pompe (5) et de l'alésage de logement d'accumulateur (1) par la deuxième rangée de valves (Y).

4. Groupe hydraulique suivant la revendication 1 ou 2, **caractérisé en ce que** plusieurs alésages de logement de valve (2", 2'") d'une troisième rangée de valves (Z) débouchent, d'une manière éloignée de la première et la deuxième rangées de valves (X, Y) , dans la première surface frontale de boîtier du corps de logement (4), la troisième rangée de valves (Z) étant placée directement à côté de l'alésage de logement d'accumulateur (1).

5. Groupe hydraulique suivant la revendication 2, **caractérisé en ce que** les alésages de logement de valve (2) de la deuxième rangée de valves (Y) s'étendent jusqu'à un deuxième plan de référence de boîtier (A2), et **en ce que** les alésages de logement de valve (2) sont reliés par paires à un conduit d'agent de pression (6) respectif qui débouche dans un conduit de liaison (7) qui mène, sous un angle d'inclinaison vis-à-vis de l'alésage de logement d'accumulateur (1), du deuxième au premier plans de référence de boîtier (A2, A1).

6. Groupe hydraulique suivant la revendication 1, **caractérisé en ce que** le conduit de retour (8) mène, sous un angle d'inclinaison, à un conduit d'agent de pression (9) qui débouche dans l'alésage de logement de pompe (5) et qui est placé, à l'extérieur d'un premier etdeuxième plans de référence de boîtier (A1, A2), dans un troisième plan de référence de boîtier (A3).

7. Groupe hydraulique suivant les revendications 5 et 6, **caractérisé en ce que** l'alésage de logement de pompe (5) est placé entre le deuxième et le troisième plans de référence de boîtier (A2, A3), d'une manière limitée par le conduit de liaison (7) et le conduit de retour (8) inclinés.

8. Groupe hydraulique suivant la revendication 1, **caractérisé en ce que**, pour la régulation de la pression de blocage dans les freins de roue, les valves d'entrée et valves de sortie sont, dans les alésages de logement de valve (2, 2') de la première et la deuxième rangées de valves (X, Y), actionnés exclusivement par la voie électromagnétique.

9. Groupe hydraulique suivant la revendication 4, **caractérisé en ce que**, pour l'interruption de la liaison d'agent de pression entre le raccord de générateur de pression de frein (B1 B2) et les valves d'entrée de la première rangée de valves (X), une valve à électro-aimant respective, commutée à l'état ouvert en position de base, est disposée d'une manière respective dans les alésages de logement de valve (2'") de la troisième rangée de valves (Z) .

10. Groupe hydraulique suivant la revendication 9, **caractérisé en ce que**, pour la liaison hydraulique directe du raccord de générateur de pression de frein (B1, B2) avec un raccord côté aspiration de l'alésage de logement de pompe (5), une valve à électro-aimant fermée en position de base est prévue dans un alésage de logement de valve (2") de la troisième rangée de valves (Z).

11. Groupe hydraulique suivant la revendication 1, **caractérisé en ce qu'**une sortie côté refoulement de l'alésage de logement de pompe (5) débouche dans une chambre d'amortissement de bruit (10) qui est disposée à l'extérieur d'un premier et un deuxième plans de référence de boîtier (A1, A2) du corps de logement (4) .

12. Groupe hydraulique suivant la revendication 11, **caractérisé en ce que** la chambre d'amortissement de bruit (10) est réalisée sous forme d'une chambre annulaire qui est orientée coaxialement à l'alésage de logement de pompe (5) et qui est placée au niveau du passage de conduit côté refoulement de l'alésage de logement de pompe (5).

13. Groupe hydraulique suivant la revendication 11, **caractérisé en ce que** la chambre d'amortissement de bruit (10) est disposée entre les raccords d'agent de pression des alésages de logement de valve (2") d'une troisième rangée de valves (Z).

14. Groupe hydraulique suivant la revendication 11, **caractérisé en ce que** la chambre d'amortissement de bruit (10) est raccordée à un conduit d'agent de pression (11) qui est placé d'une manière éloignée vis-à-vis du premier, du deuxième et d'un troisième plans de référence de boîtier (A1, A2, A3), **en ce qu'**il est raccordé au conduit d'agent de pression (11) un conduit d'embranchement d'agent de pression (12) qui mène à l'alésage de logement de valve (2") de la valve à électro-aimant disposée dans la troisième rangée de valves (Z) et commutée à l'état ouvert en position de base.

15. Groupe hydraulique suivant la revendication 1, **caractérisé en ce que** les conduits d'agent de pression (9, 11, 13) s'étendent, à l'opposé de plusieurs raccords d'agent de pression du générateur de pression de frein (B1, B2), débouchant dans le corps de logement (4) , et des freins de roue (R1 à R4), d'une manière telle qu'au choix, une troisième rangée de valves (Z) peut être positionnée, en vue d'une réalisation d'alésages en bloc unitaire multifonctionnelle, dans une première surface frontale de boîtier comportant la première et la deuxième rangées de valves (X, Y) et peut être reliée aux conduits d'agent de pression (9, 11, 13), la troisième rangée de valves (Z) étant espacée de la première et la deuxième rangées de valves (X, Y) par un alésage de logement d'accumulateur (1) placé dans la première surface frontale de boîtier.

16. Groupe hydraulique suivant la revendication 15, **caractérisé en ce que** l'alésage de logement d'accumulateur (1) sert à loger un accumulateur basse pression (24) qui constitue un sous-groupe pouvant être manipulé d'une manière indépendante.
